# EUROPÄISCHE PATENTSCHRIFT

(11) **EP 3 704 461 B1**
(45) Veröffentlichungstag und Bekanntmachung des Hinweises auf die Patenterteilung: **19.06.2024**
(21) Anmeldenummer: 18800874.2
(22) Anmeldetag: 02.11.2018
(51) Int. Cl.: G01M 5/00

(54) **VERFAHREN ZUR BESTIMMUNG VON ELASTO-PLASTISCHEN EIGENSCHAFTEN UND DES VERSAGENVERHALTENS EINES PRÜFKÖRPERS**
METHOD FOR DETERMINING ELASTOPLASTIC PROPERTIES AND THE FAILURE BEHAVIOR OF A TEST BODY
PROCÉDÉ POUR DÉTERMINER DES PROPRIÉTÉS ÉLASTOPLASTIQUES ET LE COMPORTEMENT D'ÉCHEC D'UN ÉCHANTILLON D'ESSAI

(30) Priorität: 03.11.2017 DE 102017219591
(43) Veröffentlichungstag der Anmeldung: 09.09.2020
(73) Patentinhaber: Fraunhofer-Gesellschaft zur Förderung der angewandten Forschung e.V., 80686 München (DE)
(72) Erfinder: ROSEMEIER, Malo, 28211 Bremen (DE); GEBAUER, Thomas, 28201 Bremen (DE)
(74) Vertreter: Pfenning, Meinig & Partner mbB
(86) Internationale Anmeldenummer: PCT/EP2018/080063
(87) Internationale Veröffentlichungsnummer: WO 2019/086637

(56) Entgegenhaltungen:
- EP-A1- 2 749 862
- WO-A1-2014/041739
- WO-A1-2014/161858
- GB-A- 2 548 589
- US-A1- 2016 018 284

## Beschreibung

Die Anmeldung betrifft ein Verfahren zum Prüfen von Prüfkörpern, insbesondere von Subkomponenten von Windenergieanlagen, wie Komponenten von Windenergieanlagenrotorblättern, in Prüfständen mit uniaxialer Krafteinleitung und Kraftaufnahme.

Die Rotorblätter von Windenergieanlagen sind im Betrieb starken Belastungen sowie Verschleiß ausgesetzt. Die Leistungsoptimierung bei größtmöglicher Sicherheit stellt beim Bau von Windenergieanlagen und insbesondere beim Entwickeln der Rotorblätter eine große Herausforderung dar. Hierfür sollten die elastischen Eigenschaften, wie Elastizitätsmodul, Streckgrenze, Festigkeit, Bruchdehnung, also die Belastbarkeit sowie die plastische und elastische Verformbarkeit, und weitere Strukturkennwerte des Rotorblatts bekannt sein. Derartige Kenngrößen können beispielsweise in Prüfständen, wie sie in Verfahren gemäß der Anmeldung zum Einsatz kommen, bestimmt werden. Hierfür werden Prüfkörper, also beispielsweise die Komponenten der Windenergieanlagenrotorblätter, in den Prüfstand eingespannt und auf Zug oder Druck belastet. So können beispielsweise Kennlinien aufgezeichnet werden und es kann festgestellt werden bei welchen Kräften oder Dehnungen es zum Bruch oder zum Versagen des Prüfkörpers kommt. Aufgrund der Länge der Rotorblätter, die häufig über 30 m beträgt, ist das Prüfen der Blätter mit großem technischem, zeitlichem und finanziellem Aufwand verbunden. Erschwerend kommt der komplizierte Aufbau der Rotorblätter hinzu. Die Rotorblätter sind häufig hybridartig, aus mehreren Materialen, aufgebaut und/oder anisotrop, haben also beispielsweise in verschiedene Raumrichtungen unterschiedliche elastische Eigenschaften, weisen Hohlräume, Aussparungen und/oder Versteifungen auf. Für derartige Prüfkörper kann nicht auf Materialtests auf Couponebene zurückgegriffen werden, da die Kennwerte stark von der Struktur abhängig sind und nicht einfach aus den Materialkennwerten errechnet werden können. Um im Prüfverfahren realistische Belastungsbedingungen zu realisieren, spielen die Richtung und der Angriffspunkt der eingeleiteten Kräfte eine große Rolle. Solche realistischen Bedingungen können insbesondere in Subkomponententests erzeugt werden. Die Subkomponententests sind dabei besser durchführbar und kontrollierbar als Ganzblatttests, da die Abmessungen der Prüfkörper kleiner sind. Computersimulationen können unterstützend herangezogen werden, können aber Belastungstests in Prüfständen nicht ersetzen.

Nach dem Stand der Technik werden Subkomponenten von Windenergieanlagen vermessen, beispielsweise Komponenten von Rotorblättern mit Abmessungen einiger Meter. Vorzugsweise werden mehrere Komponenten an unterschiedlichen Stellen des Rotorblatts entnommen und in Prüfständen vermessen. Daraus können Rückschlüsse auf das Verhalten des gesamten Rotorblatts gezogen werden. Dafür werden für die Subkomponente Bedingungen simuliert, die den Bedingungen entsprechen, die dann bestehen, wenn die Subkomponente in dem Rotorblatt angeordnet ist und letzteres unter Belastung steht. Um eine derartige Belastung der Subkomponente zu erreichen, erfolgt die Krafteinleitung an den Enden der Subkomponente an zuvor berechneten Einspannstellen, die die Krafteinleitungspunkte darstellen, die so gewählt werden, dass eine ausgeübte Belastung auf die Subkomponente eben der Belastung entspricht, die die Subkomponente bei einer bestimmten Belastung des gesamten Rotorblatts erfahren würde.

Die Druckschrift US 2016/018284 A1 bezieht sich auf eine Resonanzerzeugungsvorrichtung für die Ermüdungsprüfung eines Blattes. Sie umfasst einen leichtgewichtigen Befestigungsabschnitt, der in Kontakt mit einer Außenfläche des Blattes steht, eine Vielzahl von Aktuatoren, die auf einer Außenseite des Befestigungsabschnitts vorgesehen sind, und einen Resonanzgenerator, der so konfiguriert ist, dass er Biegebelastungen in Verbindung mit einer Verschiebung von Stangen der Aktuatoren erzeugt und sich parallel zu einer Bewegungsrichtung der Aktuatorstange hin- und herbewegt und gleichzeitig die Bewegungen des Resonanzgenerators in allen Richtungen mit Ausnahme einer Prüfrichtung verhindert.

EP 2 749 862 A1 betrifft eine Testvorrichtung für an Dreipunkt-Kraftheber anzuhängende, achslose Anbaugeräte, insbesondere landwirtschaftliche Anbaugeräte für Traktoren, die einen in mehreren Freiheitsgraden durch wenigstens drei Aktoren bewegbaren Prüfkörper aufweist, mit dessen Bewegung die Fahrtbewegungen einer Zugmaschine, insbesondere eines Traktors simulierbar sind, wobei der Prüfkörper drei Aufnahmeelemente aufweist, die in der geometrischen Konfiguration eines Dreipunkt-Krafthebers angeordnet sind und an die ein zu testendes Anbaugerät mit einem zu einem Dreipunkt-Kraftheber korrespondierendem Kupplungsbereich, insbesondere einem A-Rahmen freihängend befestigbar ist und im angehängten Zustand durch die Aktoren bewegbar ist.

WO 2014/041739 A1 zeigt einen Vibrationsgenerator. Dieser hat ein Paar Limit-Schalter, die an einem Führungsträger vorgesehen sind. Einer der Limit-Schalter ist an der unteren Endposition eines Gewichts vorgesehen, und der andere der Limit-Schalter ist an der oberen Endposition des Gewichts vorgesehen. Das Gewicht ist mit einem zu erfassenden Abschnitt versehen. Wenn das Gewicht die untere Endposition erreicht, nimmt der zu erfassende Abschnitt Kontakt mit dem Limit-Schalter auf, und wenn das Gewicht die obere Endposition erreicht, nimmt der zu erfassende Abschnitt Kontakt mit dem Limit-Schalter auf.

Die WO 2014/161858 A1 betrifft eine Kombination aus einem Prüfstand und einem Prüfkörper zur Durchführung eines Ermüdungsversuchs, wobei der Prüfkörper nicht achsensymmetrisch ist, und umfasst:
- ein zentrales Element,
- ein erstes Verzweigungselement, das eine Längsachse aufweist, die sich in einem Winkel zur Längsachse des zentralen Elements erstreckt,
- ein Gelenk, das das erste Verzweigungselement mit dem zentralen Element verbindet, das eine Biegeresonanzfrequenz in der Ebene mit einer zugehörigen Biegemodenform in der Ebene und eine Biegeresonanzfrequenz außerhalb der Ebene mit einer zugehörigen Biegemodenform außerhalb der Ebene aufweist, wobei die Biegeresonanzfrequenz in der Ebene und die Biegefrequenz außerhalb der Ebene im Wesentlichen gleich sind, wobei der erste Knoten der Form der Biegemode in der Ebene und der erste Knoten der Form der Biegemode außerhalb der Ebene im Wesentlichen an dergleichen Position am ersten Zweigelement sind und wobei der Prüfstand umfasst:
   - eine Stütze zum Abstützen des Prüfkörpers,
   - einen Erreger, um den Prüfkörper einer erzwungenen Schwingung bei einer Erregerfrequenz auszusetzen.

Ziel der Anmeldung ist es, ein Verfahren zu beschreiben, welches eine Krafteinleitung auf effiziente und kontrollierte Weise ermöglicht. Insbesondere können mit einem Verfahren gemäß der Anmeldung Biegemomente kontrolliert werden und schädigende Kräfte auf Einspannvorrichtungen mit welchen die Prüfkörper eingespannt werden, reduziert werden.

Dies wird durch ein Verfahren gemäß des unabhängigen Anspruchs 1 oder gemäß des unabhängigen Anspruchs 7 geleistet. Vorteilhafte Ausführungen ergeben sich aus den abhängigen Unteransprüchen.

Da für anisotrope Prüfkörper mit inhomogenem Aufbau, wie sie im Fall von Subkomponenten von Windenergieanlagen in der Regel vorliegen, die elastischen Eigenschaften in unterschiedliche Richtungen unterschiedlich sind, wird eine Längsachse als Referenzachse definiert. Hierfür kann eine beliebige Achse herangezogen, die nachfolgend als z-Achse eines körperfesten Koordinatensystems bezeichnet wird. Die Längsachse oder z-Achse kann beispielsweise im Falle von Komponenten, die Windenergieanlagenrotorblättern entstammen, als die Achse orthogonal zu dem Flansch der Rotorblätter definiert werden. Das heißt, die Ebene des Flansches, mit dem die Rotorblätter an der Nabe befestigt werden können, dient als eine Referenzebene. Die Längsachse kann dabei beispielsweise durch den Mittelpunkt des Flansches verlaufen. Es kann aber auch eine andere Referenzachse oder Referenzfläche gewählt werden. Somit kann ein Bezugssystem definiert werden, das an dem Prüfkörper fixiert ist.

Die Kraft soll beim Prüfen in die z-Richtung oder mit einer Komponente in z-Richtung des körpereigenen Koordinatensystems an Außenflächen des Prüfkörpers, die von der z-Achse geschnitten werden, eingeleitet werden. Die Außenflächen können orthogonal zur z-Achse, parallel zur xy-Ebene liegen, oder schräg dazu. Die Kraftrichtung hat dabei zumindest eine Komponente in die z-Richtung oder Längsrichtung.

Die Kraft soll hierbei nicht vollflächig in die Außenflächen eingeleitet werden, sondern an festgelegten Angriffspunkten. Um eine Kraft derart in den Prüfkörper einleiten zu können, werden Einspannvorrichtungen bereitgestellt, die den Prüfkörper an auf den Außenflächen liegenden Einspannstellen einspannen und über die Einspannvorrichtungen wird der Prüfkörper auf Zug oder Druck belastet. Hierdurch wird eine punktförmige Krafteinleitung ermöglicht, also insbesondere eine Krafteinleitung, die nicht an der gesamten Schnittfläche oder Außenfläche des Prüfkörpers erfolgt.

Durch eine gezielte Krafteinleitung und Wahl der Einspannstellen können unterschiedliche Belastungsbedingungen generiert werden.

Um die Krafteinleitung an den Einspannstellen, die die Angriffspunkte darstellen, beschreiben zu können, wird das Konzept der Wirklinien herangezogen. Unter den Wirklinien sind die Geraden zu verstehen, die die Lage einer Kraft im Raum angeben. Sie verlaufen parallel bzw. koaxial zu dem Kraftvektor einer wirkenden Kraft und durch den Angriffspunkt der Kraft, also durch die Einspannstellen, bzw. durch die Einspannvorrichtungen. Sie stellen die Verlängerung des Kraftvektors ins Unendliche dar.

Gemäß der Erfindung wird eine Kraft an mindestens einer der punktförmigen Einspannstellen eingeleitet. Die Einspannstellen werden so angeordnet und die Kraftrichtungen so gewählt, dass eine Wirklinie der an mindestens einer der beiden Einspannstellen eingeleiteten Kraft parallel zu einer Verbindungslinie zwischen den beiden Einspannstellen verläuft. Das heißt, die Kraftrichtung der an der mindestens einen der beiden Einspannstellen eingeleiteten Kraft wird in Richtung der jeweils anderen Einspannstelle gewählt. Dann werden Scherkräfte und/oder Drehmomente vermieden und die Wirklinien aller eingeleiteten und aufgenommenen Kraftkomponenten, ; fallen im Wesentlichen in einer einzigen Wirklinie zusammen. Einspannquerkräfte verschwinden in dieser Konfiguration.

Wird ein Prüfkörper in einem Belastungstest beispielsweise an einer ersten Einspannstelle und an einer zweiten Einspannstelle, wie oben beschrieben, punktförmig belastet, so soll demnach eine beispielsweise an einer ersten Einspannstelle eingeleitete Zug- oder Druckbelastung mit einer Kraftrichtung im Wesentlichen entlang einer die beiden Einspannstellen verbindenden Geraden erfolgen.

Würden die Einspannstellen und somit die Krafteinleitungspunkte gegeneinander verschoben, sodass sie nicht gegenüberliegend angeordnet sind und/oder die Kraftrichtung verändert, so dass die Wirklinie der eingeleiteten Kräfte nicht mehr in der Verbindungslinie der Einspannstellen zusammenfallen, so entstünden an den Einspannstellen Querkräfte, also Kraftbeiträge die orthogonal zu der Längsachse verlaufen. Bei fest ausgebildeten Einspannvorrichtungen entstehen in diesem Fall Einspannmomente.

Gemäß der vorliegenden Anmeldung sollen Einspannmomente und Einspannquerkräfte verhindert werden. Eingeleitete Kräfte, deren Wirklinie nicht im Wesentlichen in Richtung der Verbindungslinie zwischen den Einspannvorrichtungen verläuft, sind also nicht vorgesehen.

In einer Ausführung erfolgt die Krafteinleitung während des ganzen Versuchs genau in Richtung der Verbindungslinie, in einer anderen Ausführung erfolgt die Krafteinleitung zu einem vorgegebenen Zeitpunkt, zum Beispiel zu Beginn des Versuchs, in Richtung der Verbindungslinie und weicht danach nicht wesentlich von der Verbindungslinie ab.

Eine zur Beschreibung des Anmeldungsgenstands benötigte Definition betrifft die Schwerpunktslinie oder elastische Schwerpunktslinie eines Körpers bzw. Prüfkörpers. Zerlegt man den Prüfkörper orthogonal zu der definierten Längsachse, also orthogonal zur z-Achse, in infinitesimale Scheiben, so lässt sich für jede Scheibe ein elastischer Schwerpunkt berechnen. Der elastische Schwerpunkt ist dadurch definiert, dass ein prismatischer Körper mit Querschnitt der Scheibe kein Biegemoment erfährt, wenn die Krafteinleitung oben und unten an diesem Schwerpunkt orthogonal zu den Außenflächen des Prüfkörpers, stattfindet. Bei prismatischen Körpern aus einem homogenen Material ist der elastische Schwerpunkt gleich der Flächenschwerpunkt. Inhomogene Körper mit einem über die Fläche in x- und/oder y-Richtung variablen Elastizitätsmodul besitzen einen elastischen Schwerpunkt, auch ideeller Schwerpunkt genannt, der nicht dem Flächenschwerpunkt entspricht, sondern beispielsweise hin zu Regionen größeren Elastizitätsmoduls verschoben ist. Zur Theorie der Berechnung von allgemeinen elastischen oder ideellen Schwerpunkten kann beispielsweise das "Lehrbuch der Technischen Mechanik - Elastostatik, Mit einer Einführung in Hybridstrukturen" von Rolf Mahnken, erschienen bei Springer-Verlag Berlin Heidelberg 2015, herangezogen werden. Alternativ lassen sich für jede infinitesimale Scheibe des Prüfkörpers auch zwei elastische Achsen definieren, deren Schnittpunkt den elastischen Schwerpunkt darstellt. Für einen Körper lässt sich also eine elastische Schwerpunktslinie definieren, die durch die elastischen Schwerpunkte jeder infinitesimalen Scheibe verläuft.

In einem prismatischen Körper (dessen Materialzusammensetzung sich in einer Richtung orthogonal zu den Oberflächen, also in diesem Beispiel in z-Richtung, nicht ändert) verläuft diese Schwerpunktslinie in z-Richtung, orthogonal zu den Schnittflächen.

Im allgemeinen Fall eines nicht prismatischen Körpers, dessen Querschnitt sich entlang der Richtung orthogonal zu den Oberflächen, in z-Richtung, ändert, existiert die Schwerpunktslinie ebenfalls. Genauso für einen Körper, der zwar eine prismatische Geometrie hat, dessen Materialzusammensetzung sich aber räumlich ändert. Die elastische Schwerpunktslinie verläuft dann im Allgemeinen nicht orthogonal zu den Oberflächen und nicht durch die geometrischen Flächenschwerpunkte. Sie kann beispielsweise Schräg verlaufen wenn der Körper in der Längsrichtung beispielsweise auf einer Seite dicker oder schmäler wird, der Schwerpunkt der infinitesimalen Flächen über die Länge des Körpers also wandert. Der Begriff Schwerpunktslinie sei in dieser Anmeldung immer als Linie durch die elastischen Schwerpunkte zu verstehen.

Die Schwerpunktslinie kann in einem solchen allgemeinen Fall auch Diskontinuitäten oder einen in Bezug auf die Längsachse oder z-Achse gekrümmten bzw. nicht parallelen Verlauf aufweisen, beispielsweise wenn der Körper einseitig Aussparungen aufweist oder einseitig Materialen mit anderen elastischen Eigenschaften eingebracht sind.

Der Abstand der Schwerpunktslinie in jeder infinitesimalen Scheibe des Prüfkörpers von der Wirklinie ist als Exzentrizität definiert.

Fallen die Wirklinie und die Schwerpunktslinie zusammen, liegt also keine Exzentrizität vor, so wird kein Biegemoment in den Prüfkörper eingeleitet und der Prüfkörper erfährt während des Prüfens keine Biegung.

In einem Fall, in dem die Schwerpunktslinie einen geraden und kontinuierlichen Verlauf hat, kann eine Kraft konzentrisch eingeleitet werden, indem die Einspannstellen an den Außenflächen so gewählt werden, dass sie mit der Schwerpunktslinie koinzidieren und die Kraftrichtung entlang der Schwerpunktslinie gewählt wird. Die Exzentrizität verschwindet in jeder infinitesimalen Scheibe und der Prüfkörper erfährt keine Biegung.

Die Kraft kann auch mit einer Exzentrizität zur Schwerpunktslinie, eingeleitet werden, sodass durch den Hebelarm zwischen Schwerpunktslinie und Wirklinie ein Biegemoment entsteht. Die Exzentrizität an der oberen Einspannstelle kann größer oder kleiner als die Exzentrizität an der unteren Einspannstelle sein, so dass ein über die Länge des Prüfkörpers veränderliches Biegemoment eingeleitet wird. Die Exzentrizität kann auch in jeder infinitesimalen Scheibe gleich sein, so dass ein konstantes Biegemoment in den Prüfkörper eingeleitet wird. In einem Prüfkörper mit einer diskontinuierlichen Biegelinie wird immer ein Biegemoment eingeleitet.

Biegemomente können je nach Versuch gewünscht oder unerwünscht sein. Mit der vorliegenden Anmeldung sollen eingeleitete Biegemomente modifiziert und Einspannquerkräfte reduziert werden können.

Werden Biegemomente in den Prüfkörper eingeleitet, kann das in einer Verdrehung der Prüfkörperaußenflächen zueinander resultieren. Dann erfahren die Prüfkörperaußenflächen eine Drehung um die Einspannstellen. Werden feste Einspannvorrichtungen verwendet, entstehen Einspannmomente, welche schädigend auf die festen Einspannvorrichtungen wirken können. Der Einsatz von festen Einspannvorrichtungen ist daher in diesem Fall unvorteilhaft. Gemäß der Anwendung werden in diesem Fall flexible Einspannvorrichtungen verwendet, die eine Verdrehung der Prüfkörperaußenflächen tolerieren.

Im Fall verschwindender Biegemomente oder wenn sich Biegemomente gegenseitig aufheben, so dass keine Verdrehung der Prüfkörperaußenflächen stattfindet, liegen Fälle verschwindender Einspannmomente vor und es können im Sinne der Anmeldung auch feste Einspannvorrichtungen verwendet werden.

Flexible Einspannvorrichtungen können beispielsweise Kardan- oder Kugelgelenke umfassen. Einspannvorrichtungen kann eine Vorzugsachse zugewiesen werden, sodass das Gelenk oder die Einspannvorrichtung, mit einer Kraft entlang einer Vorzugsrichtung belastet werden kann. Ist das Gelenk unausgelenkt und liegt eine Belastung in Richtung der Vorzugsrichtung vor, ist eine stärkere Belastung möglich, ohne dass es zum Versagen der Einspannvorrichtung kommt, als wenn das Gelenk ausgelenkt bzw. die Einspannvorrichtung gebogen ist. Im Falle eines Kugelgelenks ist beispielsweise die Achse, die zentral durch die Kugel und den Schaft verläuft, diese Vorzugsachse. Wird das Gelenk ausgelenkt, so verdrehen sich Gelenkschaft und Gehäuse zueinander und es wird nicht entlang der Achse belastet. Gleichermaßen ergeben sich für andere mögliche Einspannvorrichtungen, die für Verfahren im Sinne der Anmeldung in Frage kommen, solche Vorzugsachsen.

In manchen Verfahren gemäß der Anmeldung werden die Prüfkörper vorzugsweise so eingespannt, dass im Ausgangszustand, zu Beginn des Verfahrens, oder während einer anderen Phase des Prüfvorgangs, zum Beispiel während einer Endphase in der besonders große Kräfte wirken, die Krafteinleitung entlang dieser Vorzugsachsen beider Einspannvorrichtungen erfolgt. Dann fallen die beiden Vorzugsachsen zusammen und koinzidieren im Wesentlichen mit der Wirklinie der eingeleiteten Kraft und also mit der Verbindungslinie zwischen den Einspannstellen. Kommen bei Verfahren gemäß dieser Anmeldung flexible Einspannvorrichtung zum Einsatz, weicht die Wirklinie der eingeleiteten Kraft vorzugsweise jeweils höchstens um 30 Grad von der Vorzugsrichtung der beiden flexiblen Einspannvorrichtungen ab, besonders bevorzugt höchstens 30 Grad.

Flexible Einspannvorrichtungen werden in Verfahren gemäß der Anmeldung vorzugsweise höchstens um 30 Grad, besonders bevorzugt höchstens um 20 Grad ausgelenkt.

Werden Einspannstellen wie oben beschrieben gewählt und die Einspannvorrichtungen so angeordnet, dass die Wirklinie aller Kräfte zumindest während einer definierten Phase zumindest im Wesentlichen mit den Vorzugsachsen der Einspannvorrichtungen koinzidiert und keine unerwünschten Querkraftkomponenten entstehen, kann ein für eine Belastung von 200-400 kN ausgelegtes Kugelgelenk zumindest in dieser Phase auch mit zumindest annähernd 200-400 kN entlang der Längsrichtung belastet werden. Beispielsweise werden Verfahren im Sinne der Anmeldung mit Kräften zwischen 1 kN und 5000 kN, vorzugsweise mit Belastungen von zwischen 100 und 1000 kN, besonders bevorzugt mit einer Belastung von zwischen 200 und 800 kN ausgeführt. Bei Verfahren, die nicht der Anmeldung entsprechen, in denen Einspannmomente und Einspannquerkräfte auftreten muss in der Praxis die maximale Last beim Prüfen reduziert werden, damit es nicht zu übermäßigem Verschleiß oder zum Versagen der Gelenke kommt. Das heißt, dass beispielsweise um eine Belastung entlang der Längsachse von 200 kN im Versuch erreichen zu können, Gelenke eingesetzt werden müssen, die für eine Belastung von 400 kN oder mehr ausgelegt sind.

Die für die Prüfung erforderlichen Belastungsbedingungen in der Subkomponente herzustellen ist einerseits mit rechnerischem Aufwand verbunden, da die Einspannstellen theoretisch vorberechnet werden müssen; andererseits stellt das Herstellen dieser Bedingungen eine technische Herausforderung dar, da die Krafteinleitung sehr gezielt entlang bestimmter Linien in die Subkomponente erfolgen soll, die Subkomponente also so eingespannt und befestigt werden muss, dass eine derartige Krafteinleitung überhaupt möglich ist.

Eine Subkomponente wird in manchen Ausführungen so ausgeschnitten oder gefertigt, dass zwei sich gegenüberliegende Außenflächen entstehen, die beispielsweise orthogonal zu der z-Achse sind. Die Flächen liegen dann beide parallel zur xy-Ebene. Die Krafteinleitung kann an Einspannstellen an beiden Flächen, orthogonal zu diesen Flächen, in z-Richtung, erfolgen. Die vorliegende Anmeldung ist im Gegensatz zur herkömmlichen Prüfung von Subkomponenten nicht auf derartige Schnitte oder Krafteinleitungsrichtungen beschränkt. Es können auch schräge gegenüberliegende oder im Wesentlichen gegenüberliegende Außenflächen gewählt werden, die von der Längsachse oder z-Achse geschnitten werden. Durch einen Rahmen oder eine entsprechend modifizierte Einspannvorrichtung kann auch bei schrägen Außenflächen erreicht werden, dass die Vorzugsachsen beider Einspannvorrichtungen in einer Linie liegen und mit der Wirklinie der eingeleiteten Kraft koinzidieren, bzw. so, dass die Vorzugsachse jeder flexiblen Einspannvorrichtung jeweils nicht mehr als 30 Grad von der Wirklinie der eingeleiteten Kraft abweicht, bevorzugt nicht mehr als 20 Grad und/oder die flexiblen Einspannvorrichtungen nicht mehr als 30 Grad ausgelenkt werden, bevorzugt nicht mehr als 20 Grad.

Beim Prüfen eines Prüfkörpers gibt es Fälle, in denen Biegemomente gewünscht sind und Fälle in denen Biegemomente ausgeschaltet werden sollen, je nachdem welche Art der Belastung angestrebt ist. Um beispielsweise beim Testen von Subkomponenten die Bedingungen simulieren zu können, die herrschen würden, wenn die Subkomponente innerhalb des Rotorblatts verbaut wäre, und gleichzeitig die Einspannvorrichtungen nicht zu stark zu beanspruchen, ist es vorteilhaft, die Biegemomente kontrollieren zu können, also gezielt ein- oder auszuschalten, bzw. zu verringern oder zu erhöhen. Eine solche Kontrolle der Biegemomente ist ebenfalls Teil dieser Anmeldung und wird nachfolgend beschrieben.

Um die Biegemomente beliebig vergrößern, verkleinern oder ausschalten zu können, werden in Verfahren gemäß der Anmeldung die oben definierten elastischen Schwerpunktslinien des Prüfkörpers modifiziert und in Relation zu der einen Wirklinie der eingeleiteten Kraft, je nach gewünschter Anwendung, ausgerichtet.

Die Anmeldung greift dabei auf eine Methode zur Modifikation der Schwerpunktslinien zurück. Die Schwerpunktslinie des Prüfkörpers kann durch Anbringen von zusätzlichem Material oder Federn in eine vorzugsweise vorbekannte modifizierte Schwerpunktslinie eines Gesamtsystems aus Prüfkörper und zusätzlichem Material oder Federn überführt werden. Dafür werden das zusätzliche Material oder die Federn an mindestens einer Seite des Prüfkörpers angeordnet. An einer Seite bedeutet dabei, dass das Material oder die Federn an oder neben einer der Seitenflächen des Prüfkörpers angebracht werden, die gerade nicht die Außenflächen sind, die von der Längsachse geschnitten werden, so dass sich das zusätzliche Material oder die Federn in zumindest einem Teil der infinitesimalen Scheiben erstrecken. Die infinitesimalen Scheiben erstrecken sich dabei über die äußeren Abmessungen des eigentlichen Prüfkörpers hinaus um das zusätzliche Material oder die Federn zu beinhalten. Dadurch wird in jeder infinitesimalen Scheibe in der sich zusätzliches Material oder Federn befinden der elastische Schwerpunkt der jeweiligen Scheibe und somit der Verlauf der Schwerpunktslinie verändert.

Die Anmeldung greift weiterhin auf eine Methode zurück bei der durch Kippen des Werkstücks um eine Achse in der xy-Ebene vor dem Einspannen, die Exzentrizitäten der beiden Einspannstellen eingestellt werden können. Die eingeleitete Kraft besitzt weiterhin eine Wirklinie entlang der Verbindungslinie zwischen den Einspannstellen. Die Biegemomente können aber durch die Wahl der Exzentrizitäten verändert werden.

Bei der Erstellung von Subkomponenten kann zusätzliches Material beispielsweise durch eine andere Wahl des vorzugsweise vorberechneten Schnitts bereitgestellt werden. Die Subkomponente kann auch von vorneherein als solche gefertigt werden. Dabei kann in der Herstellung bereits an bestimmten Stellen zusätzliches Material angebracht werden, wobei das zusätzliche Material an der entsprechenden Stelle im Arbeitszustand, beispielsweise als Teil eine Windenergieanlage, nicht vorgesehen ist. Zusätzliches Material, beispielsweise in Form von Federn oder anderem elastischen Material kann aber auch durch nachträgliches Anbringen an dem Prüfkörper bereitgestellt werden. Das zusätzliche Material kann anlaminiert oder angeklebt werden oder es können T- oder I-Träger anlaminiert oder angeklebt werden, die dann mit Federn verbunden werden.

Liegt in einem Beispiel ein homogener, prismatischer Prüfkörper vor, an dessen Außenflächen an den elastischen Schwerpunkten, ohne Exzentrizität anmeldungsgemäß eine Kraft eingeleitet wird, koinzidiert die Wirklinie der eingeleiteten Kraft mit der Schwerpunktslinie und der Prüfkörper verbiegt sich nicht. Soll nun das Biegeverhalten untersucht werden, kann die Schwerpunktslinie anmeldungsgemäß in die Schwerpunktslinie eines Gesamtsystems aus Prüfkörper und beispielsweise Federn überführt werden. Wird beispielsweise einseitig an dem Prüfkörper eine Feder auf voller Länge des Prüfkörpers angebracht, so wird die Schwerpunktslinie des Gesamtsystems parallel zu den Wirklinien der eingeleiteten und aufgenommenen Kräfte verschoben und ein Biegemoment eingeleitet, da die Einspannstellen dann jeweils eine Exzentrizität zu der Schwerpunktslinie aufweisen, wobei die Exzentrizitäten identisch sind. So kann ohne Veränderung der Einspannstellen eine andersartige Belastung in dem Prüfkörper hergestellt werden.

Liegt in einem anderen Fall zum Beispiel ein nicht prismatischen Prüfkörper vor, oder ein inhomogen zusammengesetzter Prüfkörpers, bei dem die Schwerpunktslinie eine Diskontinuität oder eine Biegung oder Ausbauchung aufweist, können Biegemomente nicht ohne weiteres verhindert werden, da die Wirklinien, die als Geraden definiert sind, nicht mit der diskontinuierlichen oder gebogenen Schwerpunktslinie koinzidieren können. Das führt dazu dass beim Prüfen eines solchen Körpers Biegemomente auftreten. Diese führen zu einer Biegung und somit, im Falle einer flexiblen Einspannung, welche Verdrehungen erlaubt, zu einer Verdrehung der Prüfkörperaußenflächen, an denen der Prüfkörper eingespannt ist, gegenüber den Einspannvorrichtungen. In manchen Ausführungsformen ist eine solche Biegung bzw. Verdrehung unerwünscht.

In einer Ausführungsform wird ein Prüfkörper mit diskontinuierlicher oder nicht konstanter Steifigkeit, beispielsweise ein Prüfkörper, dessen Steifigkeit an beiden Einspannstellen gleich ist, und dessen Schwerpunktslinie in einem mittleren Bereich eine Diskontinuität aufweist, mittels Einspannvorrichtungen so eingespannt, dass beide Einspannstellen keine Exzentrizität zur Schwerpunktslinie an den Enden des Prüfkörpers aufweisen und die Wirklinie der eingeleiteten Kraft zu Beginn kongruent zu den Achsen der Einspannvorrichtungen ist. Durch die Diskontinuität wird dann in herkömmlichen Verfahren ein Biegemoment im Bereich der Diskontinuität eingeleitet, da in dem mittleren Bereich die Wirklinie und die Schwerpunktslinie voneinander abweichen. Um Biegemomente und die damit verbundene Verdrehung der Außenflächen tolerieren zu können, werden die Prüfkörper in einer Ausführungsform beispielsweise mittels flexibler Strukturen als Einspannvorrichtungen, wie beispielsweise Kardan- oder Kugelgelenken, beweglich eingespannt, so dass eine Biegung des Körpers und somit eine Verdrehung der Prüfkörperaußenflächen, an denen der Körper eingespannt ist, gegenüber den Einspannvorrichtungen ermöglicht.

In einer Ausführungsform der Anmeldung wird eine zu große Verdrehung der Prüfkörperaußenflächen, an denen der Prüfkörper eingespannt ist, gegenüber der Einspannvorrichtungen behoben, indem Biegemomente kontrolliert verringert werden. Das Biegemoment kann im Sinne der Anmeldung durch eine Parallelschaltung von zusätzlichen Steifigkeiten in dem Bereich der Diskontinuität eliminiert werden. Bei den Steifigkeiten kann es sich beispielsweise um Federn handeln oder um anderes zusätzliches Material. Vorzugsweise kommen Federn mit bekannter Federkonstante zum Einsatz, die zielgerichtet eingesetzt werden können und deren Beitrag beispielsweise aus vorangestellten Berechnungen bekannt ist, oder der in nachfolgenden Berechnungen, beispielsweise numerischen Berechnungen, herausgerechnet werden kann. Die Federn oder das zusätzliche Material verändern in den infinitesimalen Ebenen, durch die sie verlaufen, die Lage des elastischen Schwerpunkts. Der elastische Schwerpunkt wird in einer infinitesimalen Ebene, durch die zusätzliches Material oder eine Feder verläuft, beispielsweise zu dem zusätzlichen Material oder der Feder hin verschoben. Je nach Materialeigenschaft und Federkonstante weisen das zusätzliche Material oder die Federn einen höheren oder niedrigeren Elastizitätsmodul auf und der Schwerpunkt wird somit stärker oder weniger stark in Richtung des zusätzlichen Materials verschoben. Dadurch kann die diskontinuierliche Schwerpunktslinie in eine kontinuierliche, gerade verlaufende Schwerpunktslinie eines Gesamtsystems, das den Prüfkörper und das zusätzliche Material oder die Federn umfasst, überführt werden. Die Schwerpunktslinie wird durch das Einbringen von Steifigkeiten in einer Ausführung so modifiziert, dass die Biegemomente verringert werden um die Verdrehung der Außenflächen gegenüber der Einspannvorrichtungen zu reduzieren und die Einspannvorrichtungen weniger zu beanspruchen. Die Schwerpunktslinie wird durch das Einbringen von Steifigkeiten in einer anderen Ausführung so modifiziert, dass sie kongruent zu der Wirklinie aller an den Einspannstellen eingeleiteten und/oder aufgenommenen Kräfte wird, und alle Biegemomente verschwinden. In einer Variante der letztgenannten Ausführung wird dann auf flexible Einspannvorrichtungen wie Kugelgelenke oder Kardangelenke komplett verzichtet und stattdessen starre Einspannvorrichtungen verwendet, die beispielsweise weniger verschleißanfällig oder günstiger sind und/oder das Anlegen einer größeren Kraft erlauben.

In einem weiteren Verfahren gemäß der Anmeldung soll ein Biegemoment in den Prüfkörper eingeleitet werden um entsprechende Biegespannungen in dem Prüfkörper zu erzeugen und die damit verbundene Elongation bzw. Dehnung zu messen, bzw. die Wirkung des Biegemoments auf den Prüfkörper zu testen. Beispielsweise wird ein entlang der Längsachse nicht konstantes Biegemoment eingeleitet, wenn die beiden Einspannstellen jeweils eine andere Exzentrizität, also einen anderen Abstand, zu der Schwerpunktslinie aufweisen. Anstatt die Einspannstellen zu diesem Zweck gegeneinander zu verschieben um die gewünschte Exzentrizität am oberen und unteren Ende des Prüflings zu erhalten, wodurch Einspannquerkräfte entstehen würden, kann der Prüfkörper und mit ihm seine Schwerpunktslinie anmeldungsgemäß so gekippt werden, dass die Einspannstellen die gewünschte Exzentrizität aufweisen. Die Krafteinleitung erfolgt dann weiterhin so, dass die Wirklinie der eingeleiteten Kraft durch die Verbindungslinie zwischen den Einspannstellen verläuft. Vorzugsweise werden die Einspannvorrichtungen so angeordnet, dass ihre Vorzugsachsen ebenfalls mit der Wirklinie koinzidieren, oder zumindest nicht mehr als 30 Grad von der Wirklinie abweichen, bevorzugt nicht mehr als 20 Grad, beispielsweise mittels entsprechend ausgebildeten Rahmens. Es kann dann aufgrund der gewählten Exzentrizitäten zu einer Biegung des Körpers kommen, die vorteilhaft durch den Einsatz von flexiblen Einspannvorrichtungen, wie zum Beispiel Kugelgelenken oder Kardangelenken ermöglicht wird. Da durch die Anordnung der Einspannstellen Einspannmomente und Einspannquerkräfte vorteilhaft eliminiert oder reduziert werden, wird eine wirtschaftliche Ausnutzung der Gelenke ermöglicht.

Zusätzlich oder alternativ zu der Kippung des Prüfkörpers können Biegemomente anmeldungsgemäß auch in den Prüfkörper eingeleitet werden, indem die Schwerpunktslinie des Prüfkörpers durch Anbringen von zusätzlichen Steifigkeiten wie zusätzlichem Material oder Federn in die Schwerpunktslinie eines Gesamtsystems aus Prüfkörper und zusätzlichem Material überführt wird.

Es kann auch an mehreren Seiten des Prüfkörpers zusätzliches Material oder Federn angebracht werden. Zum Beispiel in unterschiedlichen Abschnitten entlang der z-Achse, um in den unterschiedlichen Abschnitten unterschiedliche Biegemomente einzuleiten.

Es können auch einseitig an dem Prüfkörper mehrere Federn in z-Richtung übereinander angeordnet und jeweils an dem Körper befestigt werden, wobei die Federn unterschiedliche Federkonstanten haben. Die Federn können beispielsweise so angeordnet sein, dass die Federkonstanten der Federn in einer positiven z-Richtung abnehmen und somit die Schwerpunktslinie des Gesamtsystems gegenüber den Wirklinien gekippt und verschoben wird. Dadurch weisen die Einspannstellen eine jeweils unterschiedliche Exzentrizität zu der Schwerpunktslinie des Gesamtsystems auf, und es wird ein über die Länge des Prüfkörpers nicht konstantes Biegemoment eingeleitet. Weitere Konfigurationen, beispielsweise Federn die nicht auf der ganzen Länge angebracht werden, zum Einbringen einer Diskontinuität, sind ebenfalls möglich.

Es kann auch einseitig an dem Prüfkörper zusätzliches Material angebracht werden, das sich in eine Richtung verjüngt, wodurch ebenfalls die Schwerpunktslinie des Gesamtsystems aus Prüfkörper und zusätzlichem Material gegenüber der Schwerpunktslinie des Prüfkörpers gekippt und verschoben wird, zum Einleiten eines nicht konstanten Biegemoments.

In Ausführungsformen in denen Biegemomente in den Prüfkörper eingeleitet werden, können die Einspannvorrichtungen so konfiguriert werden, dass zu Beginn des Verfahrens die Krafteinleitung entlang der Vorzugsrichtung der Einspannvorrichtungen erfolgt und der Körper während des Prüfens sich nur wenig verbiegt, beispielsweise dank eingebrachter Federn oder zusätzlichen Materials und/oder aufgrund einer entsprechend gewählten Kippung, so dass die Krafteinleitung weiterhin im Wesentlichen entlang der Vorzugsrichtung der Einspannvorrichtungen erfolgt.

In manchen Ausführungen kann der Nutzen der Kontrolle oder Reduzierung der Biegemomente darin bestehen, die Verdrehung der Prüfkörperaußenflächen, an denen der Prüfkörper eingespannt ist, gegenüber der Einspannvorrichtungen zu reduzieren. In anderen Ausführungsformen kann der Nutzen darin bestehen, gezielt eine andersartige Belastung für den Prüfkörper zu erzeugen. Beide Vorteile können in manchen Ausführungen miteinander kombiniert werden.

In einer Ausführung werden die Biegeeigenschaften eines Prüfkörpers vor dem Einspannen in den Prüfstand mittels eines Computerprogramms simuliert und beispielsweise eine geeignete Kippung des Körpers vor dem Einspannen, geeignete Einspannstellen sowie geeignete Federkonfigurationen oder Konfigurationen von zusätzlichem Material ausgerechnet.

Die Ausführungen mit zusätzlichem Material oder Federn und die Ausführungen in denen der Prüfkörper vor dem Einspannen gekippt wird können vorteilhaft miteinander kombiniert werden.

Verfahren im Sinne der Anmeldung können bei Prüfkörpern mit komplexen Querschnitten, insbesondere Prüfkörpern, die aus mehreren Materialien zusammengesetzt sind oder Aussparungen aufweisen, oder Prüfkörper die weitgehend hohl sind und Versteifungsstrukturen aufweisen, beispielsweise Komponenten von Windenergieanlagenrotorblättern. Das Verfahren ist besonders geeignet für Prüfkörper, die in einer Längsrichtung entlang der z-Achse, oder in einer Richtung, die sich im Wesentlichen entlang der Wirklinie der aus den eingeleiteten Kräften resultierenden Gesamtkraft erstreckt, eine Länge von zwischen 1 cm und 15 m, bevorzugt von zwischen 1 m und 10 m, aufweisen.

Wird die Kraft, wie in der Anmeldung vorgesehen, nicht vollflächig sondern, wie beschrieben, mittels Einspannvorrichtungen punktförmig eingeleitet, so kann eine unerwünschte Deformation durch Verwendung eines starren Rahmens durch Platten, die auf den Außenflächen des Prüfkörpers angeordnet sind, vermieden werden. Dann erfolgt die Krafteinleitung über die Platte. Als Wirklinie ist weiterhin die Linie durch die Einspannstelle bzw. die Einspannvorrichtung zu verstehen. Die Oberfläche wird in einer Ausführung nur als ganzes verschoben und/oder verdreht. In einer Ausführung wird ein starrer Rahmen zur Verfügung gestellt, der beispielsweise mit den Prüfkörperkanten oder -oberflächen verklebt wird.

Ausführungen der Anmeldung und erläuternde Beispiele zu der Anmeldung finden sich in den Figuren. Es zeigen
- Figur 1: einen Prüfkörper mit diskontinuierlicher Schwerpunktslinie;
- Figur 2: einen Prüfkörper mit einer Feder zur Modifikation der Schwerpunktslinie;
- Figur 3: einen Prüfkörper mit versetzt angeordneten Einspannstellen zum Erzeugen eines Biegemoments;
- Figur 4: einen Prüfkörper mit übereinander angeordneten Einspannstellen und zusätzlichem Material zum Erzeugen eines Biegemoments;
- Figur 5: einen Prüfkörper mit übereinander angeordneten Einspannstellen und Federn zum Erzeugen eines Biegemoments;
- Figur 6: einen gekippten Prüfkörper mit übereinander angeordneten Einspannstellen zum Erzeugen eines Biegemoments;
- Figuren 7 a und b: Seitenansicht und Querschnitt eines Teils eines Windturbinenrotorblatts mit Linien, die den Verlauf der Subkomponenten andeuten; und
- Figuren 8a und 8b: Einspannvorrichtungen, ausgebildet als Kugelgelenk (a), bzw. aus I-Trägern (b), was nicht in den Schutzbereich der beanspruchten Erfindung fällt, mit einem Teil des Prüfkörpers, unter Krafteinleitung entlang der Vorzugsrichtung der Einspannvorrichtungen.

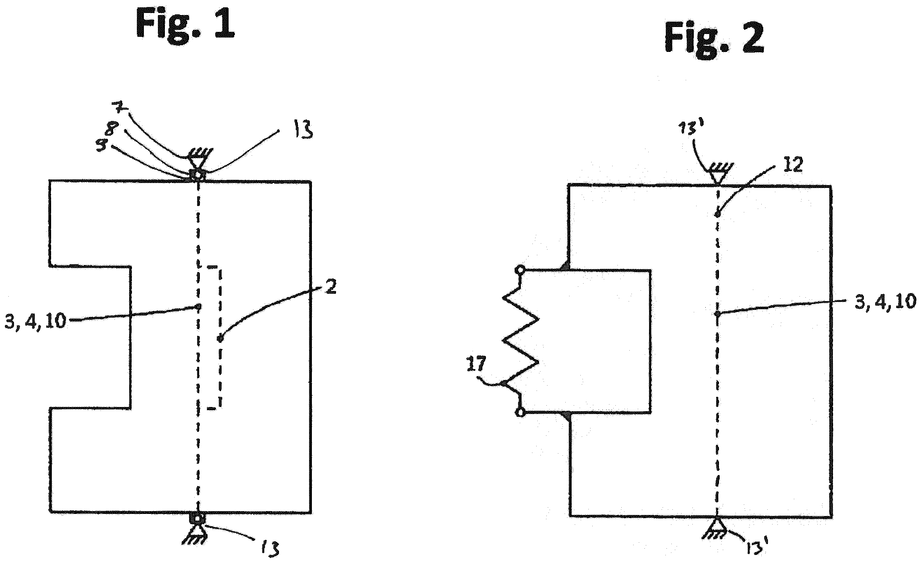

Figur 1 zeigt einen Prüfkörper 1, dessen Geometrie so geartet ist, dass er eine diskontinuierliche Schwerpunktslinie 2 aufweist. Die Schwerpunktslinie 2 ist diejenige Linie die in einem homogenen Material mit überall konstantem Elastizitätsmodul durch die geometrischen Flächenschwerpunkte der Flächen orthogonal zu einer Längsachse des Körpers, die eine z-Achse definiert, verläuft. Die Längsachse kann beispielsweise im Falle einer Komponente eines Windenergieanlagenrotorblatts diejenige Achse sein, die orthogonal zu einer durch den Flansch des Rotorblatts definierten Ebene, durch das Zentrum des Flansches, verläuft. In einem inhomogenen Material mit räumlich veränderlichem Elastizitätsmodul verläuft die Schwerpunktslinie durch die elastischen Schwerpunkte, die im allgemeinen Fall nicht identisch mit den geometrischen Flächenschwerpunkten sein müssen. Aufgrund einer Materialaussparung in einem mittleren Bereich des in der Figur gezeigten Prüfkörpers 1 verschiebt sich der elastische Schwerpunkt in diesem mittleren Bereich und die Schwerpunktslinie weist eine Diskontinuität auf. Der Prüfkörper 1 ist an zwei Einspannstellen mittels zweier Einspannvorrichtungen 13 eingespannt, wobei beide Einspannstellen keine Exzentrizität zur Schwerpunktslinie 2 aufweisen. An mindestens einer der beiden Einspannstellen wird eine Kraft eingeleitet in Richtung der jeweils anderen Einspannstelle. Die Wirklinie 10 der eingeleiteten Kraft verläuft demnach durch beide Einspannstellen und parallel zu der Längsachse des Prüfkörpers. Durch eine derartige Anordnung wird vermieden, dass es weitere Kraftkomponenten gibt, mit Wirklinien, die nicht parallel zu der Verbindungslinie der Einspannstellen verläuft. Weiterhin koinzidiert die Wirklinie 10 zumindest zu Beginn des Prüfverfahrens mit Vorzugsrichtungen 3, 4 der Einspannvorrichtungen 13. Die Vorzugsrichtungen 3, 4 der Einspannvorrichtungen 13 sind diejenigen Achsen, die zentral durch die unverformten Einspannvorrichtungen 13 verlaufen. Aufgrund der Diskontinuität in der Schwerpunktslinie fallen in dem mittleren Bereich die Schwerpunktslinie und die Wirklinien nicht zusammen und es entstehen in dieser Konfiguration Biegemomente, die beispielsweise zu einer Verdrehung der Prüfkörperaußenflächen, an denen der Prüfkörper eingespannt ist, gegenüber den Einspannvorrichtungen 13, führen. Die Einspannvorrichtungen 13 sind in diesem Beispiel daher als Kugelgelenke, bestehend aus Gelenkschaft 7, Gelenkkugel 8 und Gelenkgehäuse 9, ausgebildet, um ein Biegen des Prüfkörpers zu erlauben. In einer späteren Phase des Prüfverfahrens, wenn der Prüfkörper verformt ist, werden die flexiblen Einspannvorrichtungen ausgelenkt. Vorzugsweise werden die Gelenke um höchstens 30 Grad, besonders bevorzugt um höchstens 20 Grad ausgelenkt.

Figur 2 zeigt den Prüfkörper 1 aus Figur 1, der hier mit einer zusätzlichen Steifigkeit in Form einer Feder 17 versehen ist. Die Feder 17 ist so ausgestaltet und positioniert, dass die ursprüngliche Schwerpunktslinie 2 in eine modifizierte Schwerpunktslinie 12 des Gesamtsystems aus Prüfkörper 1 und Feder 17 übergeht. Dazu weist die Feder einen solchen Elastizitätsmodul auf und wird so angeordnet, dass in dem Bereich der Diskontinuität der elastische Schwerpunkt so weit in Richtung der Feder verschoben wird, dass die Diskontinuität eliminiert wird. Die Schwerpunktslinie 12 des Systems aus Feder 17 und Prüfkörper 1 fällt mit der Wirklinie 10 der an den Einspannvorrichtungen 13' eingeleiteten Kräfte zusammen. Das Gesamtsystem aus Prüfkörper 1 und Feder 17 besitzt dann eine kontinuierlich und gerade verlaufende Schwerpunktslinie 12, wie sie beispielsweise in homogenen prismatischen Körpern vorliegt. Es entstehen keine Biegemomente und somit verdrehen sich die Außenflächen gegenüber den Einspannvorrichtungen 13' nicht. Daher kann eine Krafteinleitung immer entlang der Vorzugsrichtungen 3, 4 der Einspannvorrichtungen 13' eingeleitet werden und die Einspannvorrichtungen 13' können besonders gut ausgenutzt oder als feste Einspannvorrichtungen ausgestaltet sein. Eine Deformation oder ein Eindrücken der Flächen des Prüfkörpers, an denen die Kraft eingeleitet wird, kann beispielsweise verhindert werden, indem starre Platten auf die Flächen aufgelegt werden. Die Feder 17 kann aber auch so ausgestaltet sein, dass das Biegemoment lediglich reduziert, aber nicht ganz eliminiert wird, so dass die Schwerpunktslinie weiterhin eine Diskontinuität, aber eine kleinere Diskontinuität als zuvor, aufweist, zur Reduzierung gelenkschädlicher Verdrehungen. In diesem Fall sollten dann weiterhin flexible Einspannvorrichtungen 13 verwendet werden.

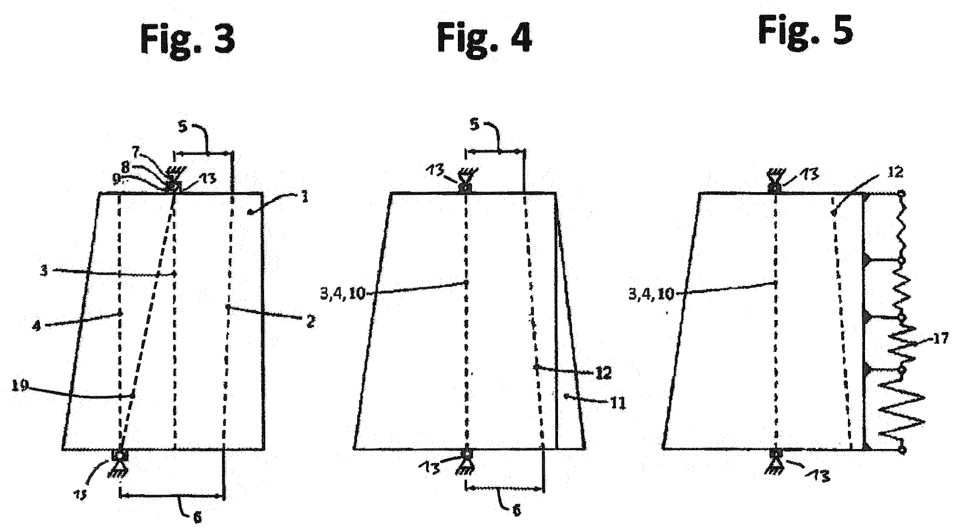

Figur 3 zeigt einen Prüfkörper 1 mit einer Schwerpunktslinie 2. Die Schwerpunktslinie 2 verläuft, von oben nach unten betrachtet, leicht von rechts nach links. Zum Einleiten eines gewünschten Biegemoments weisen die Einspannstellen unterschiedliche Exzentrizitäten 5, 6 zu der Schwerpunktslinie auf, wobei in dem gezeigten Beispiel eine erste Exzentrizität 5 an einem oberen Ende des Prüfkörpers 1 kleiner ist als eine zweite Exzentrizität 6 an einem unteren Ende des Prüfkörpers 1. Die beiden Einspannvorrichtungen 13 sind zu diesem Zweck gegeneinander versetzt angeordnet. Auch die Vorzugsachsen 3, 4 der Einspannvorrichtungen koinzidieren hier nicht miteinander. Durch die versetzten Einspannvorrichtungen ergibt sich ein Hebelarm und es resultieren Kräfte orthogonal zu den Prüfkörperaußenflächen. Einspannvorrichtungen 13 werden in dem Verfahren stark querbelastet, da sie ein in den Prüfkörper eingeleitetes Drehmoment aufnehmen müssen. Die jeweils an den Einspannvorrichtungen 13 anliegende Gesamtkraft hat Komponenten entlang der Vorzugsachsen 3, 4 der Einspannvorrichtungen und Komponenten orthogonal zu den Vorzugsrichtungen 3, 4. Letztere Kraftkomponenten sind die die Querkräfte, welche im Sinne der Anmeldung vermieden werden sollen, da sie schädigend auf die Einspannvorrichtung wirken können. Die hier gezeigte Ausführung ist daher als nachteilhaft anzusehen.

Figur 4 zeigt den Prüfkörper 1 aus Figur 3. Die beiden Einspannvorrichtungen 13 sind so angeordnet und die Kräfte werden so eingeleitet, dass die Wirklinie 10 durch beide Einspannstellen verläuft. Weiterhin koinzidiert diese resultierende Wirklinie 10 zumindest zu Beginn des Prüfverfahrens mit den Vorzugsachsen 3, 4 der Einspannvorrichtungen. Um eine gewünschte Biegespannung, ähnlich der Biegespannung in der Anordnung aus Figur 3, zu erreichen, wird an einer Seite des Prüfkörpers zusätzliches Material 11 bereitgestellt. Bei Subkomponenten die aus einem größeren Stück geschnitten werden kann hierfür ein anderer Schnittverlauf gewählt werden um zusätzliches Material 11 auf einer Seite zu erhalten. Die Subkomponente kann aber auch gleich entsprechend gefertigt werden oder das zusätzliche Material 11 kann nachträglich an dem Prüfkörper befestigt werden. Das zusätzliche Material 11 ist beispielsweise in Form und/oder Steifigkeit so ausgebildet, dass es über seine Länge in seiner Ausdehnung oder in seinen Elastizitätseigenschaften variiert. In dem gezeigten Beispiel verjüngt sich das zusätzliche Material zu einem oberen Ende hin. Dadurch wird die ursprüngliche Schwerpunktslinie 2 des Prüfkörpers aus Figur 3 in eine modifizierte Schwerpunktslinie 12 des Gesamtsystems aus Prüfkörper 1 und zusätzlichem Material 11, wie in Figur 4 gezeigt, überführt. Der elastische Schwerpunkt verschiebt sich in jeder Schnittebene hin zu dem zusätzlichen Material und es wird gezielt eine andersartige Belastung des Prüfkörpers erreicht, als ohne zusätzliches Material bei der gleichen Krafteinleitung erreicht würde. Dort wo das zusätzliche Material dicker ist verschiebt sich der Schwerpunkt stärker. Durch die Ausgestaltung des zusätzlichen Materials ist die Schwerpunktslinie 12 im Vergleich zur Schwerpunktslinie 2 gekippt. Die Schwerpunktslinie 2 in Figur 3 verläuft, von oben nach unten betrachtet, leicht von rechts nach links, während die modifizierte Schwerpunktslinie 12, von oben nach unten betrachtet, leicht von links nach rechts verläuft. Die so modifizierte Schwerpunktslinie 12 ist in Relation zu der Wirklinie 10 derart positioniert, dass die beiden Einspannstellen eine jeweils andere Exzentrizität 5, 6 aufweisen, wobei im in der Figur gezeigten Beispiel eine Konstellation in der eine erste Exzentrizität 5 an einem oberen Ende des Prüfkörpers 1 kleiner ist als eine zweite Exzentrizität 6 an einem unteren Ende des Prüfkörpers 1, ähnlich wie sie auch in Figur 3 angestrebt wurde, nunmehr bei zusammenfallenden Wirklinien der resultierenden Kraftkomponenten 10 gewährleistet ist. Mit dem Aufbau aus Figur 4 lassen sich also ähnliche Biegemomente wie in Figur 3 in den Prüfkörper einleiten, jedoch werden Einspannquerkräfte eliminiert oder reduziert, so dass die Beanspruchung der Einspannvorrichtungen 13 deutlich geringer ist als in Figur 3. Dadurch können die Prüfkörper stärker belastet oder kleinere Gelenke bei gleicher Krafteinleitung verwendet und somit Kosten gespart werden. Da sich durch die Biegemomente die Außenflächen des Prüfkörpers in Relation zu den Einspannvorrichtungen verdrehen können, sind die Einspannvorrichtungen 13 hier vorteilhaft als Kugel- oder Kardangelenke ausgebildet. Beispielsweise sind die Einspannvorrichtungen 13 so konfiguriert, dass die Krafteinleitung entlang der Wirklinie 10 gleichzeitig entlang der Vorzugsachsen 3, 4 der Einspannvorrichtungen erfolgt. Durch unterschiedliche Konfigurationen des zusätzlichen Materials lässt sich die Schwerpunktslinie 12 des Gesamtsystems aus Prüfkörper 1 und zusätzlichem Material 11 in unterschiedlichen Ausführungen gezielt modifizieren.

Figur 5 zeigt eine Konfiguration ähnlich der Konfiguration aus Figur 4, wobei anstelle von zusätzlichem Material 11 Federn 17 an einer Seite des Prüfkörpers angebracht und an mehreren Stellen an dem Körper befestigt sind. Die Wirkung der Federn 17 auf die modifizierte Schwerpunktslinie 12 ist in diesem Beispiel ähnlich oder identisch zu der Wirkung des zusätzlichen Materials 11 in dem Beispiel aus Figur 4. Es werden mehrere Federn übereinander parallel zu dem Prüfkörper angeordnet, wobei jede Feder an einem oberen und einem unteren Ende mit dem Körper verbunden ist. Die so geschalteten Federn können dabei jeweils andere Federkonstanten aufweisen. In dem gezeigten Beispiel hat eine obere Feder die kleinste Federkonstante und die weiter unten liegenden Federn haben von oben nach unten zunehmend größere Federkonstanten. Dort wo die Federn mit größeren Federkonstanten angeordnet sind, verschiebt sich der elastische Schwerpunkt stärker in Richtung der Federn als dort wo die Federn mit kleinerer Federkonstante angeordnet sind. Damit wird ein ähnlicher Effekt erzielt wie mit der Verjüngung des zusätzlichen Materials 11 aus Figur 4. Das Einbringen von Federn 17 kann im Vergleich zu dem Anbringen von zusätzlichem Material 11 in manchen Fällen praktische Vorteile haben, da die Federn leicht austauschbar sind und Federn mit unterschiedlichsten und genau bekannten Eigenschaften leicht erhältlich sind, so dass durch die Wahl der Federn Schwerpunktslinien besonders vorteilhaft modifiziert werden können.

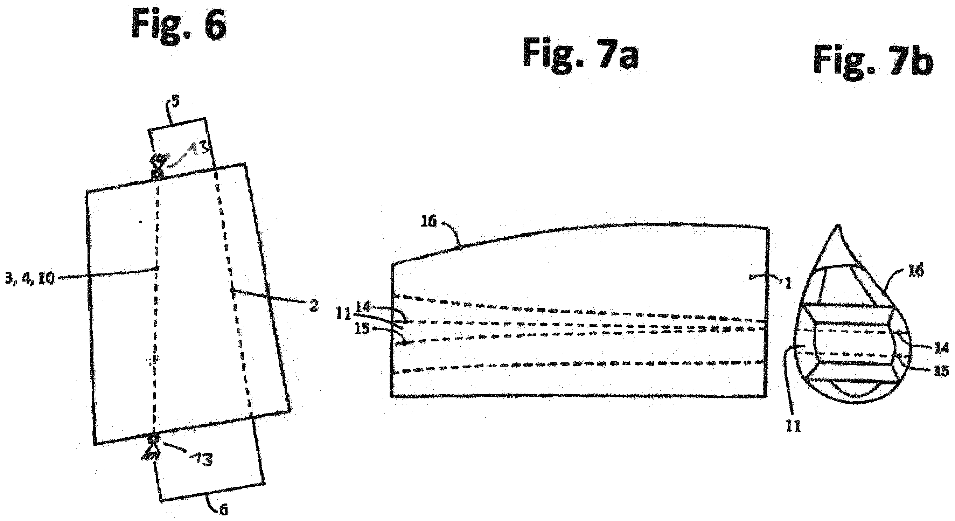

Figur 6 zeigt den Prüfkörper aus Figur 3 mit Schwerpunktslinie 2. Um eine gewünschte Biegespannung, die der resultierenden Belastung der Konfiguration aus Figur 3 entsprechen kann oder ähnelt, zu erreichen, wird wieder eine Anordnung gewählt, in der eine erste Exzentrizität 5 an einem oberen Ende des Prüfkörpers 1 kleiner ist als eine zweite Exzentrizität 6 an einem unteren Ende des Prüfkörpers 1. In dem in Figur 6 gezeigten Beispiel geschieht dies anmeldungsgemäß so, dass die Wirklinie der eingeleiteten Kraft durch beide Einspannstellen verläuft und keine weiteren Kraftkomponenten, wie beispielsweise Querkräfte, entstehen. Im Gegensatz zu der in Figur 3 gezeigten Lösung geschieht das in diesem Fall anstatt durch Verschieben der Einspannstellen durch eine Kippung des Prüfkörpers vor dem Einspannen. Dadurch, dass die Lage des Prüfkörpers 1 im Raum so verändert wird, dass die Wirklinien 10 der eingeleiteten und aufgenommenen Kräfte nahezu kongruent oder kongruent sind, können schädliche Einspannquerkräfte verringert oder eliminiert werden. Die Einspannvorrichtungen 13 können so konfiguriert sein, dass eine Krafteinleitung entlang der Wirklinie 10 gleichzeitig entlang der Vorzugsachsen 3, 4 der Einspannvorrichtungen 13 verläuft, und die Gelenke um nicht mehr als 30 Grad, besonders bevorzugt nicht mehr als 20 Grad ausgelenkt werden.

Die Ausführungen aus den Figuren 4, 5 und 6 können vorteilhaft miteinander kombiniert werden, beispielsweise dann, wenn es praktische Limitationen für das Einbringen von zusätzlichem Material oder Federn oder praktische Limitationen für eine Kippung des Prüfkörpers gibt.

Figuren 7a und b zeigen einen Teil eines Windturbinenrotorblatts 16 in einer Seitenansicht (a) und in einem Querschnitt (b). Zum Prüfen bestimmter Eigenschaften des Windturbinenrotorblatts gemäß der Anmeldung wird aus diesem Teil eine Komponente herausgeschnitten, welche den Prüfkörper 1 darstellt. Ist der Prüfkörper 1, dessen Eigenschaften vermessen werden sollen, beispielsweise durch eine erste Linie 14 gegeben, so kann es im Sinne der Anmeldung vorteilhaft sein, einen Schnitt entlang einer zweiten Linie 15 zu wählen. Dadurch entsteht ein Gesamtsystem, welches den Prüfkörper 1 und zusätzliches Material 11 umfasst, das dann in einem Prüfstand vermessen werden kann und woraus Rückschlüsse auf den Prüfkörper 1 gezogen werden können. In dem in Figur 7b gezeigten Querschnitt wird die nicht-triviale Struktur des Prüfkörpers 1 bzw. des Windturbinenrotorblatts verdeutlicht. Derartige Prüfkörper, die neben einem komplizierten geometrischen Verlauf auch Inhomogenitäten in ihrer Materialzusammensetzung aufweisen können, wodurch ihre Schwerpunktslinien weiter verkompliziert werden, können beispielsweise in einem vorbereitenden Schritt mit Hilfe von Computerprogrammen analysiert werden. Dann können Material- oder Federkonfigurationen nach den Figuren 4 oder 5 gewählt werden. Zusätzlich kann die Kippung des Prüflings nach Figur 6 gewählt werden, um die Belastung der Einspannung zu reduzieren.

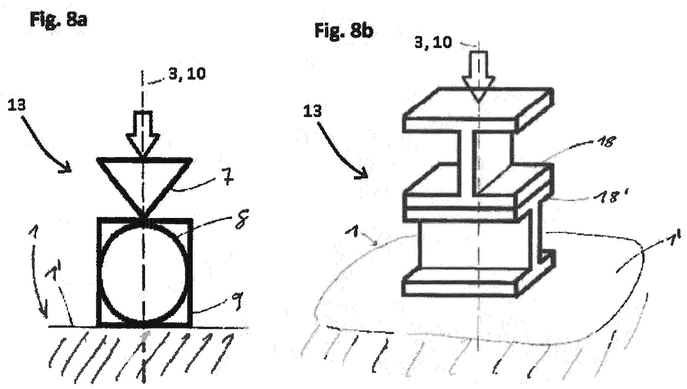

Figuren 8a und 8b zeigen beispielhaft flexible Einspannvorrichtungen 13 mit einem Teil eines Prüfkörpers 1. Die Einspannvorrichtungen 13 besitzen dabei eine Vorzugsachse 3, die zentral durch die unausgelenkten Einspannvorrichtungen 13 verläuft. Vorteilhaft werden beispielsweise Belastungen entlang der eingezeichneten Pfeile gewählt. Dann können, bei entsprechender Krafteinleitung oder Einspannung auf der gegenüberliegenden Seite (nicht gezeigt) eine Wirklinie 10 mit der Vorzugsachse 3 der Einspannvorrichtung 13 und mit der Vorzugsachse 4 der nicht gezeigten gegenüberliegenden Einspannvorrichtung zusammenfallen, wobei es keine weiteren Kraftkomponenten gibt, die nicht in dieser Wirklinie wirken. In manchen Fällen erfährt der Körper im Lauf des Prüfverfahrens eine Biegung. Dann verdrehen sich die Außenflächen 1' und bewirken eine Verbiegung oder Auslenkung der beweglichen Einspannvorrichtungen 13. Figur 8a zeigt eine als Kugelgelenk ausgebildete Einspannvorrichtung 13, mit Gelenkschaft 7, Gelenkkugel 8 und Gelenkgehäuse 9, welche mit dem Prüfkörper 1 verbunden ist. Eine Vorzugsachse 3 des Kugelgelenks verläuft zentral durch die Gelenkkugel 8 und den Gelenkschaft 7 und koinzidiert mit der Wirklinie 10 der resultierenden Gesamtkraft, die über das Kugelgelenk eingeleitet wird. Die Krafteinleitung ist mit einem Pfeil dargestellt. Die Kraft wird über die Einspannvorrichtung 13 auf den Prüfkörper 1 bzw. auf die Prüfkörperaußenfläche 1' oder eine auf der Prüfkörperaußenfläche 1' angeordnete Platte, die ein Eindrücken der Prüfkörperaußenfläche 1' verhindern kann, eingeleitet. Erfährt der Körper unter Belastung eine Biegung, so verdreht sich die Prüfkörperaußenfläche und das Kugelgelenk wird ausgelenkt, d.h. Der Gelenkschaft 7 und die Gelenkkugel 8 bleiben fest und das Gelenkgehäuse 9 verdreht sich mit der Prüfkörperaußenfläche 1' um die Gelenckugel 8. Figur 8b zeigt einen ähnlichen Sachverhalt wie Figur 8 a, der nicht in den Schutzbereich der angehängten Ansprüche fällt, für eine aus zwei I-Trägern 18 18'ausgestaltete Einspannvorrichtung. Die Vorzugsachse ist als Achse durch den Schnittpunkt der beiden I-Träger (in Draufsicht), orthogonal zu der oberen und unteren Fläche der I-Träger definiert. Die Krafteinleitung entlang der Wirklinie 10 koinzidiert wieder mit dieser Vorzugsachse. Wird die Prüfkörperaußenfläche 1' verdreht, so biegt sich mindestens einer der beiden I-Träger 18, 18'.

### Bezugszeichenliste

- 1: Prüfkörper
- 1': Außenfläche des Prüfkörpers
- 2: Schwerpunktslinie
- 3, 4: Vorzugsachsen der Einspannvorrichtungen
- 5: Exzentrizität
- 6: Exzentrizität
- 7: Gelenkschaft
- 8: Gelenkkugel
- 9: Gelenkgehäuse
- 10: Wirklinie
- 11: zusätzliches Material
- 12: modifizierte Schwerpunktslinie
- 13: flexible Einspannvorrichtung
- 13': starre Einspannvorrichtung
- 14: Komponentenschnitt
- 15: Komponentenschnitt
- 16: Teil eines Windturbinenrotorblatts
- 17: Federn
- 18, 18': I-Träger
- 19: Verbindungslinie zwischen den Einspannstelle

## Patentansprüche

1. Verfahren zur Bestimmung von elastischen Eigenschaften eines Prüfkörpers (1), wobei es sich bei dem Prüfkörper (1) um ein Windenergieanlagenrotorblatt oder eine Subkomponente einer Windenergieanlage oder eine Komponente eines Windenergieanlagenrotorblatts handelt, durch Zug- oder Druckbelastung in einem Prüfstand, wobei
- für den Prüfkörper für eine Längsachse eine Schwerpunktslinie (2) definiert ist, die durch elastische Schwerpunkte infinitesimal dicker Scheiben, die orthogonal zu der Längsachse liegen und in die sich der Prüfkörper einteilen lässt, verläuft,
- der Prüfkörper an zwei Einspannstellen mittels Einspannvorrichtungen (13, 13') eingespannt wird, **dadurch gekennzeichnet, dass** die Einspannvorrichtungen für eine punktförmige Krafteinleitung an den Einspannstellen eingerichtet sind,
- an mindestens einer der beiden Einspannstellen eine Kraft in Richtung der jeweils anderen Einspannstelle eingeleitet wird, so dass eine Wirklinie der an mindestens einer der Einspannstellen eingeleiteten Kraft im Wesentlichen parallel zu einer Verbindungslinie zwischen den beiden Einspannstellen ist,
wobei eine Richtung der Kraft zumindest eine Komponente entlang der Längsachse hat
und wobei
die Schwerpunktslinie (2) des Prüfkörpers (1) durch Bereitstellen von zusätzlichem Material (11) oder Federn (17) an dem Prüfkörper (1) in eine modifizierte Schwerpunktslinie (12) des Gesamtsystems aus dem Prüfkörper (1) und
dem zusätzlichem Material (11) oder den Federn (17) überführt wird, zum Einstellen von beim Einleiten der Kraft wirkenden Biegemomenten.

2. Verfahren nach Anspruch 1, wobei durch Einbringen von zusätzlichem Material (11) oder Federn (17) die Schwerpunktslinie (2) in die modifizierte Schwerpunktslinie (12) überführt wird, wobei die modifizierte Schwerpunktslinie (12) so gewählt ist, dass sie mit der Wirklinie (10) der an der mindestens einen Einspannstelle eingeleiteten Kraft zusammenfällt.

3. Verfahren nach Anspruch 2, wobei die Einspannvorrichtungen (13') den Prüfkörper (1) derart einspannen, dass keine Verdrehung oder Biegung des Prüfkörpers (1) während des Prüfprozesses ermöglicht wird.

4. Verfahren nach Anspruch 1, wobei zumindest eine der beiden Einspannstellen eine Exzentrizität (5, 6) zu der modifizierten Schwerpunktslinie (12) aufweist.

5. Verfahren nach Anspruch 1 oder 4, wobei der Prüfkörper (1) so gekippt eingespannt wird, dass zumindest eine der beiden Einspannstellen eine vorgegebene Exzentrizität (5, 6) zu der modifizierten Schwerpunktslinie (12) aufweist.

6. Verfahren nach einem der vorhergehenden Ansprüche, wobei an dem Prüfkörper (1) mindestens an einer Seite eine Feder (17) oder zusätzliches Material (11) angeordnet ist, oder mindestens an einer Seite mehrere Federn (17) mit gleichen oder unterschiedlichen Federkonstanten, in Reihe zueinander, angeordnet sind.

7. Verfahren zur Bestimmung von elastischen Eigenschaften eines Prüfkörpers (1), wobei es sich bei dem Prüfkörper (1) um ein Windenergieanlagenrotorblatt oder eine Subkomponente einer Windenergieanlage oder eine Komponente eines Windenergieanlagenrotorblatts handelt, durch Zug- oder Druckbelastung in einem Prüfstand, wobei
- für den Prüfkörper für eine Längsachse eine Schwerpunktslinie (2) definiert ist, die durch elastische Schwerpunkte infinitesimal dicker Scheiben, die orthogonal zu der Längsachse liegen und in die sich der Prüfkörper einteilen lässt, verläuft,
- der Prüfkörper an zwei Einspannstellen mittels Einspannvorrichtungen (13, 13') eingespannt wird, **dadurch gekennzeichnet, dass** die Einspannvorrichtungen für eine punktförmige Krafteinleitung an den Einspannstellen eingerichtet sind,
- an mindestens einer der beiden Einspannstellen eine Kraft in Richtung der jeweils anderen Einspannstelle eingeleitet wird, so dass eine Wirklinie der an mindestens einer der Einspannstellen eingeleiteten Kraft im Wesentlichen parallel zu einer Verbindungslinie zwischen den beiden Einspannstellen ist,
wobei eine Richtung der Kraft zumindest eine Komponente entlang der Längsachse hat
und wobei
der Prüfkörper durch Kippen so in seiner Lage verändert wird, dass die beiden Einspannstellen eine vorgegebene Exzentrizität (5, 6) zu der Schwerpunktslinie (2) aufweisen, zum Einstellen von beim Einleiten der Kraft wirkenden Biegemomenten.

8. Verfahren nach einem der Ansprüche 1, 2 oder 4 bis 7, wobei der Prüfkörper (1) mittels als Kugelgelenke oder Kardangelenke ausgebildeter Einspannvorrichtungen (13) so eingespannt wird, dass eine Verdrehung oder Biegung des Prüfkörpers (1) während des Prüfprozesses ermöglicht wird.

9. Verfahren nach einem der vorherigen Ansprüche, wobei die an mindestens einer Einspannstelle eingeleitete Kraft über die Einspannvorrichtungen zu Beginn des Verfahrens oder zu einem anderen vordefinierten Zeitpunkt des Verfahrens entlang Vorzugsrichtungen (3, 4) der Einspannvorrichtungen (13, 13') eingeleitet wird.

10. Verfahren nach Anspruch 8 oder nach Anspruch 9, soweit rückbezogen auf Anspruch 8, wobei die Einspannvorrichtungen während des Verfahrens höchstens um 30 Grad ausgelenkt werden.

11. Verfahren nach einem der vorherigen Ansprüche, wobei der Prüfkörper (1) eine Länge in einer Richtung entlang der eingeleiteten Kräfte von zwischen 1 cm und 15 m hat.

## Claims

1. A method for determining elastic properties of a test specimen (1), wherein the test specimen (1) is a wind turbine rotor blade or a subcomponent of a wind turbine or a component of a wind turbine rotor blade, by tensile or compressive loading in a test rig, wherein
- a centroid line (2) is defined for the test specimen for a longitudinal axis which runs through elastic centroids of infinitesimally thick discs, which are orthogonal to the longitudinal axis and into which the test specimen can be divided,
- the test specimen is clamped at two clamping points by means of clamping devices (13, 13'), **characterized in that** the clamping devices are configured for a punctiform application of force at the clamping points,
- a force is introduced in the direction of the respective other clamping point to at least one of the two clamping points, so that a line of action of the force introduced to at least one of the clamping points is substantially parallel to a connecting line between the two clamping points,
wherein one direction of force has at least one component along the longitudinal axis,
and wherein
the centroid line (2) of the test specimen (1) is converted into a modified centroid line (12) of the whole system comprising the test specimen (1) and the additional material (11) or the springs (17) by providing additional material (11) or springs (17) on the test specimen (1) for adjusting bending moments that act when the force is introduced.

2. The method according to claim 1, wherein the centroid line (2) is converted into the modified centroid line (12) by introducing additional material (11) or springs (17), wherein the modified centroid line (12) is selected such that it coincides with the line of action (10) of the force introduced to the at least one clamping point.

3. The method according to claim 2, wherein the clamping devices (13') clamp the test specimen (1) such that no twisting or bending of the test specimen (1) is permitted during the testing process.

4. The method according to claim 1, wherein at least one of the two clamping points has an eccentricity (5, 6) relative to the modified centroid line (12).

5. The method according to claim 1 or 4, wherein the test specimen (1) is clamped in a tilted manner such that at least one of the two clamping points has a predetermined eccentricity (5, 6) relative to the modified centroid line (12).

6. The method according to any one of the preceding claims, wherein a spring (17) or additional material (11) is arranged on at least one side of the test specimen (1) or a plurality of springs (17) with the same or different spring constants are arranged in series with one another on at least one side.

7. A method for determining elastic properties of a test specimen (1), wherein the test specimen (1) is a wind turbine rotor blade or a subcomponent of a wind turbine or a component of a wind turbine rotor blade, by tensile or compressive loading in a test rig, wherein
- a centroid line (2) is defined for the test specimen for a longitudinal axis which runs through elastic centroids of infinitesimally thick discs, which are orthogonal to the longitudinal axis and into which the test specimen can be divided,
- the test specimen is clamped at two clamping points by means of clamping devices (13, 13'), **characterized in that** the clamping devices are configured for a punctiform application of force at the clamping points,
- a force is introduced in the direction of the respective other clamping point to at least one of the two clamping points, so that a line of action of the force introduced to at least one of the clamping points is substantially parallel to a connecting line between the two clamping points,
wherein one direction of force has at least one component along the longitudinal axis,
and wherein
the position of the test specimen is changed by tilting such that the two clamping points have a predetermined eccentricity (5, 6) relative to the centroid line (2), for adjusting bending moments that act when the force is introduced.

8. The method according to any one of claims 1, 2 or 4 to 7, wherein the test specimen (1) is clamped by means of clamping devices (13) configured as ball joints or universal joints in such a way that the test specimen (1) is able to twist or bend during the test process.

9. The method according to any one of the preceding claims, wherein the force introduced to at least one clamping point is introduced via the clamping devices at the beginning of the method or at another predefined time point of the method along preferred directions (3, 4) of the clamping devices (13, 13').

10. The method according to claim 8 or according to claim 9, insofar as dependent on claim 8, wherein the clamping devices are deflected by at most 30 degrees during the method.

11. The method according to any one of the preceding claims, wherein the test specimen (1) has a length in a direction along the introduced forces of between 1 cm and 15 m.

## Revendications

1. Procédé de détermination de propriétés élastiques d'un corps de test (1), le corps de test (1) étant une pale de rotor d'éolienne ou un souscomposant d'une éolienne ou un composant d'une pale de rotor d'éolienne, par chargement de traction ou de compression dans un banc de test, dans lequel
- une ligne centroïde (2) est définie pour le corps de test pour un axe longitudinal, qui s'étend à travers des centroïdes élastiques de disques d'épaisseur infinitésimale qui s'étendent orthogonalement à l'axe longitudinal, et dans lesquels le corps de test peut être divisée,
- le corps de test est fixé au niveau de deux points de fixation au moyen de dispositifs de fixation (13, 13'), **caractérisé en ce que** les dispositifs de fixation sont agencés pour une introduction de force en forme de point au niveau des points de fixation,
- une force est introduite au niveau d'au moins l'un des deux points de fixation dans la direction de l'autre point de fixation, de telle sorte qu'une ligne efficace de la force introduite au niveau d'au moins l'un des points de fixation soit sensiblement parallèle à une ligne de liaison entre les deux points de fixation,
dans lequel une direction de la force présente au moins une composante le long de l'axe longitudinal
et dans lequel
la ligne centroïde (2) du corps de test (1) est transférée, en fournissant un matériau supplémentaire (11) ou des ressorts (17) au niveau du corps de test (1) dans une ligne centroïde modifiée (12) du système global constitué du corps de test (1) et du matériau supplémentaire (11) ou des ressorts (17), pour ajuster les moments de flexion agissant lorsque la force est introduite.

2. Procédé selon la revendication 1, dans lequel la ligne centroïde (2) est transférée dans la ligne centroïde modifiée (12) par introduction de matériau supplémentaire (11) ou de ressorts (17), dans lequel la ligne centroïde modifiée (12) est choisie de manière à ce qu'elle coïncide avec la ligne efficace (10) de la force introduite au niveau du au moins un point de fixation.

3. Procédé selon la revendication 2, dans lequel les dispositifs de fixation (13') serrent le corps de test (1) de telle sorte qu'aucune torsion ou flexion du corps de test (1) ne soit possible pendant le processus de test.

4. Procédé selon la revendication 1, dans lequel au moins l'un des deux points de fixation présente une excentricité (5, 6) par rapport à la ligne centroïde modifiée (12).

5. Procédé selon la revendication 1 ou 4, dans lequel le corps de test (1) est serré de manière inclinée de telle sorte qu'au moins l'un des deux points de fixation présente une excentricité prédéterminée (5, 6) par rapport à la ligne centroïde modifiée (12).

6. Procédé selon l'une quelconque des revendications précédentes, dans lequel un ressort (17) ou un matériau supplémentaire (11) est disposé au niveau du corps de test (1) au moins d'un côté, ou plusieurs ressorts (17), avec des constantes de ressort identiques ou différente, sont agencés en série les uns par rapport aux autres.

7. Procédé de détermination de propriétés élastiques d'un corps de test (1), le corps de test (1) étant une pale de rotor d'éolienne ou un souscomposant d'une éolienne ou un composant d'une pale de rotor d'éolienne, par chargement de traction ou de compression dans un banc de test, dans lequel
- une ligne centroïde (2) est définie pour le corps de test pour un axe longitudinal, qui s'étend à travers des centroïdes élastiques de disques d'épaisseur infinitésimale qui s'étendent orthogonalement à l'axe longitudinal, et dans lesquels le corps de test peut être divisée,
- le corps de test est fixé au niveau de deux points de fixation au moyen de dispositifs de fixation (13, 13'), **caractérisé en ce que** les dispositifs de fixation sont agencés pour une introduction de force en forme de point au niveau des points de fixation,
- une force est introduite au niveau d'au moins l'un des deux points de fixation dans la direction de l'autre point de fixation, de telle sorte qu'une ligne efficace de la force introduite au niveau d'au moins l'un des points de fixation soit sensiblement parallèle à une ligne de liaison entre les deux points de fixation,
dans lequel une direction de la force présente au moins une composante le long de l'axe longitudinal
et dans lequel
la position du corps de test est modifiée par basculement de telle sorte que les deux points de fixation présentent une excentricité prédéterminée (5, 6) par rapport à la ligne centroïde (2), afin d'ajuster les moments de flexion agissant lors de l'introduction de la force,

8. Procédé selon l'une quelconque des revendications 1, 2 ou 4 à 7, dans lequel le corps de test (1) est serré au moyen de dispositifs de fixation (13) conçus comme des articulations à rotule ou des articulations à cardan de telle sorte qu'une rotation ou une flexion du corps de test (1) est rendue possible pendant le processus de test.

9. Procédé selon l'une quelconque des revendications précédentes, dans lequel la force introduite au niveau d'au moins un point de fixation est introduite via les dispositifs de fixation au début du procédé ou à un autre moment prédéfini du procédé selon des directions privilégiées (3, 4) des dispositifs de fixation (13, 13').

10. Procédé selon la revendication 8 ou selon la revendication 9, dans la mesure où elle dépend de la revendication 8, dans lequel les dispositifs de fixation sont déviés d'un maximum de 30 degrés pendant le procédé.

11. Procédé selon l'une quelconque des revendications précédentes, dans lequel le corps de test (1) présente une longueur dans une direction le long des forces introduites comprise entre 1 cm et 15 m.
